**Europäisches Patentamt**

**European Patent Office**

**Office européen des brevets**

(19)

(11) Veröffentlichungsnummer: **0 027 572**

**A1**

(12) # EUROPÄISCHE PATENTANMELDUNG

(21) Anmeldenummer: **80105886.8**

(22) Anmeldetag: **29.09.80**

(51) Int. Cl.³: **H 04 K 1/06**
      **H 04 N 1/44**

(30) Priorität: **18.10.79 CH 9350/79**

(43) Veröffentlichungstag der Anmeldung:
      **29.04.81 Patentblatt 81/17**

(84) Benannte Vertragsstaaten:
      **AT BE CH DE FR GB IT LI NL SE**

(71) Anmelder: **Crypto Aktiengesellschaft**
      **Zugerstrasse 42**
      **CH-6312 Steinhausen(CH)**

(72) Erfinder: **Caflisch, Mengia, Frl. Dr.**
      **Zugerstrasse 801**
      **CH-8915 Hausen a.A.(CH)**

(72) Erfinder: **Weber, Richard, Dr.**
      **Loretostrasse 9**
      **CH-6300 Zug(CH)**

(74) Vertreter: **Schaad, Walter F. et al,**
      **Patentanwälte W.F. Schaad, V. Balass E.E. Sandmeier**
      **Dufourstrasse 101**
      **CH-8008 Zürich(CH)**

(54) **Verfahren und Vorrichtung zur verschlüsselten Übertragung von Information.**

(57) Die zu verarbeitende und zu übermittelnde Information wird durch Informationssignalblöcke (1-12) gebildet, die durch Trennsignale voneinander getrennt sind. Die Informationssignalblöcke (1-12) sind gleich lang und werden jeweils durch fünf "O" bzw. "L"-Signale gebildet. Die sendeseitige Verschlüsselung erfolgt durch Vertauschen der Informationssignalblöcke (1-12) in ihrer zeitlichen Folge. Um einen Einbruch in das Verschlüsselungssystem zu verhindern oder zumindest stark zu erschweren, werden Informationssignalblöcke (4, 6, 10) eines gegebenen Informationsgehaltes vor der Uebermittlung ersetzt. Die Substitution der beispielsweise aus lauter "O"- Signalen (a) bestehenden Informationssignalblöcke (4, 6, 10) erfolgt durch Substitutionssignalblöcke (4', 6', 10'), die in einer quasizufälligen Signalfolge auf der Sendeseite erzeugt werden. Auf der Empfangsseite werden die Substitutionssignalblöcke durch Vergleichen erkannt und durch auf der Empfangsseite erzeugte Informationssignalblöcke ersetzt, welche den sendeseitig substituierten Informationssignalblöcken (4,6,10) entsprechen.

./...

Fig. 2

Verfahren und Vorrichtung zur verschlüsselten
Uebertragung von Information

Die vorliegende Erfindung betrifft ein Verfahren sowie eine
Vorrichtung zur verschlüsselten Uebertragung von Information gemäss Oberbegriff des Anspruches 1 bzw. des Anspruches 4.

Bei den meisten bekannten digital arbeitenden Uebertragungsverfahren wird der zu verarbeitende Impulsstrom strukturiert,
d.h. es werden Pakete gebildet, die in der Regel gleich
lang sind und somit eine gleiche Anzahl von Impulsen umfassen. Die einzelnen Pakete, die in der Telegrafie -
sprache "Zeichen" und in der Computersprache "Worte"
benannt werden, können durch Taktgebersignale voneinander
getrennt werden, die auf der Empfangsseite als Bezugssignale für die Gleichlaufsteuerung dienen.

Es ist bekannt, dass zur Verschlüsselung der zu übertragenden Meldung entweder die einzelnen Pakete als
Ganzes substituiert oder permutiert werden können
(Buchstaben- oder Blockverschlüsselung) oder aber die
Zeichenelmente einzeln einer Verschlüsselung unterworfen
werden können (Bit- oder Zeichenelementverschlüsselung).

Bei der Bildtelegrafie wird bei der Verschlüsselung häufig
das Prinzip der Blockpermutation angewendet. Dabei wird
zum Beispiel eine Bildzeile in gleichlange Blöcke aufgeteilt, die dann unter sich permutiert werden. Da aber eine Bildinformation viel monotoner aufgebaut ist als zum Beispiel eine Sprachinformation und viele gleichartige Abschnitte aufweist, z.B. viel weiss (speziell bei der Uebertragung von Zeichnungen oder Textvorlagen), ist in der Regel eine Permutation über mehrere Zeilen hin notwendig. Diesbezüglich sind aber Grenzen durch die Verfahrensregeln gesetzt, da die Permutation immer mit einer zeitlichen Verzögerung verbunden ist.

Heutige Bildtelegrafiegeräte arbeiten bekanntlich nach genormten Verfahren. Innerhalb einer bestimmten Zeit nach der Verbindungsaufnahme muss der Start der Uebertragung erfolgen. Nach einer gewissen von da weg laufenden Zeitspanne ist der Empfänger nicht mehr in der Lage, weitere Information zu verarbeiten. Ist nun in die Uebertragungsstrecke eine Schlüsseleinrichtung eingeschaltet, so sollte dadurch der ganze Vorgang möglichst nicht geändert werden. Das bedeutet aber, dass eine bestimmte Laufzeitverzögerung nicht überschritten werden kann. Aus diesem Grund ist es daher unrealistisch, z.B. Blöcke aus der letzten Zeile eines Bildtelegrammes mit solchen aus der ersten Zeile permutieren zu wollen. Dieselbe Beschränkung, wenn auch in anderer Grössenordnung, ergibt sich im Uebrigen auch bei der Sprachverschlüsselung, da auch hier bestimmte Laufzeiten nicht überschritten werden können, sollte ein vernünftiges Gespräch möglich sein.

Bei der Bildtelegrafie hat diese Beschränkung nun aber zur Folge, dass unter Umständen gewisse Bildstrukturen auch nach der Permutation noch erkennbar sind. So wird z. B. das Chiffrat einer Vorlage mit einem schwarzen, breiten Balken aufgrund der grossen, für das Auge leicht erkennbaren Redundanz Rückschlüsse auf das Original zulassen. Wenn auch die genaue Bildstruktur bei der Wiedergabe der permutierten Information verwaschen wirkt, ergeben sich jedoch durch blockweise Korrelation doch Möglichkeiten für kryptologische Einbrüche.

Sind die Informationssignale bzw. Informationssignalgruppen durch Lücken ohne eigentlichen Informationsgehalt voneinander getrennt, so besteht die Gefahr, dass auch nach der Verschlüsselung diese Lücken Anlass zu Rückschlüssen auf das Verschlüsselungsgesetz und die übertragene Information geben. Um dies zu vermeiden, ist schon vorgeschlagen worden, sendeseitig diese Lücken ganz oder teilweise durch Füllsignale auszufüllen, die empfangsseitig wieder ausgeschieden werden (FR-PS 2 233 768, DE-PS 855 876). Bei einer andern Lösung erfolgt in diesen Lücken eine Invertierung der Zeichen gemäss einem bestimmten Verschlüsselungsgesetz.

Diese bekannten Verfahren und Vorrichtungen sind jedoch nicht dazu geeignet, Einbrüche in das Verschlüsselungssystem in denjenigen Fällen zu verhindern, in denen nicht die Lücken zwischen den Informationssignalblöcken sondern diese Informationssignalblöcke selbst Anlass zu solchen Einbrüchen geben können.

Es stellt sich somit die Aufgabe, ein Verfahren bzw. eine Vorrichtung der eingangs genannten Art zu schaffen, das bzw. die ein Erkennen der Gesetzmässigkeit der Verschlüsselung bzw. ein Rückschliessen auf den Inhalt der übertragenden Information aufgrund einzelner Informationssignalblöcke verunmöglicht oder zumindest erheblich erschwert.

Diese Aufgabe wird erfindungsgemäss durch die im kennzeichnenden Teil des Anspruches 1 bzw. des Anspruches 4 aufgeführten Merkmale gelöst.

Das sendeseitige Ersetzen von gewissen Informationssignalblöcken, z.B. Blöcken, die vollständig aus gleichartigen
Signalen bestehen, durch Substitutionssignalblöcke, die
durch Signale unterschiedlicher Art gebildet sind, hat nun
zur Folge, dass auf der Uebertragungsstrecke nur noch Signalblöcke von inhomogenem Aufbau erscheinen. Ein Rückschliessen auf den Gehalt der übertragenen Information bzw. ein
Ausfindigmachen des Verschlüsselungsgesetzes ist zumindest stark erschwert wenn nicht gar verunmöglicht. Empfangsseitig wird durch Ersetzen der Substitutionssignalblöcke
durch Informationssignalblöcke der ursprüngliche Informationsgehalt der übertragenen Information wiederhergestellt.

Es lassen sich empfangsseitig nicht nur Informationssignalblöcke, die aufbaumässig von einer Art sind, substituieren,
sondern auch Informationssignalblöcke, die in ihrem Aufbau
zwei oder mehr verschiedenen Arten angehören.

Im Folgenden wird anhand der Zeichnung ein Ausführungsbeispiel des Erfindungsgegenstandes näher erläutert. Es zeigt
schematisch:

    Fig. 1    ein Blockschaltbild einer Vorrichtung
             zum Uebertragen von verschlüsselter
             Information, und

    fig. 2    verschiedene zur Erläuterung der Verschlüsselungs- und Substitutionsvorgänge

dienende Impuls- Zeit- Diagramme.

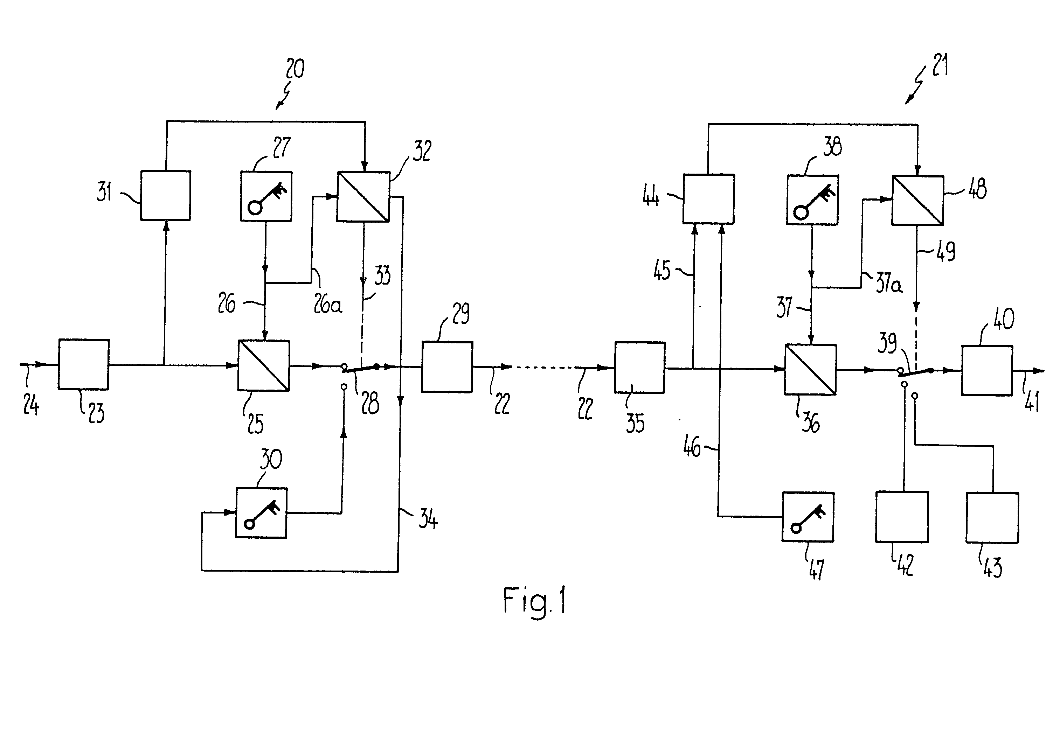

Anhand der Fig. 1 wird im Folgenden der Aufbau der Anlage beschrieben. Dabei wird auf die Erläuterung des Aufbaus und der Wirkungsweise von bekannten Bauteilen verzichtet.

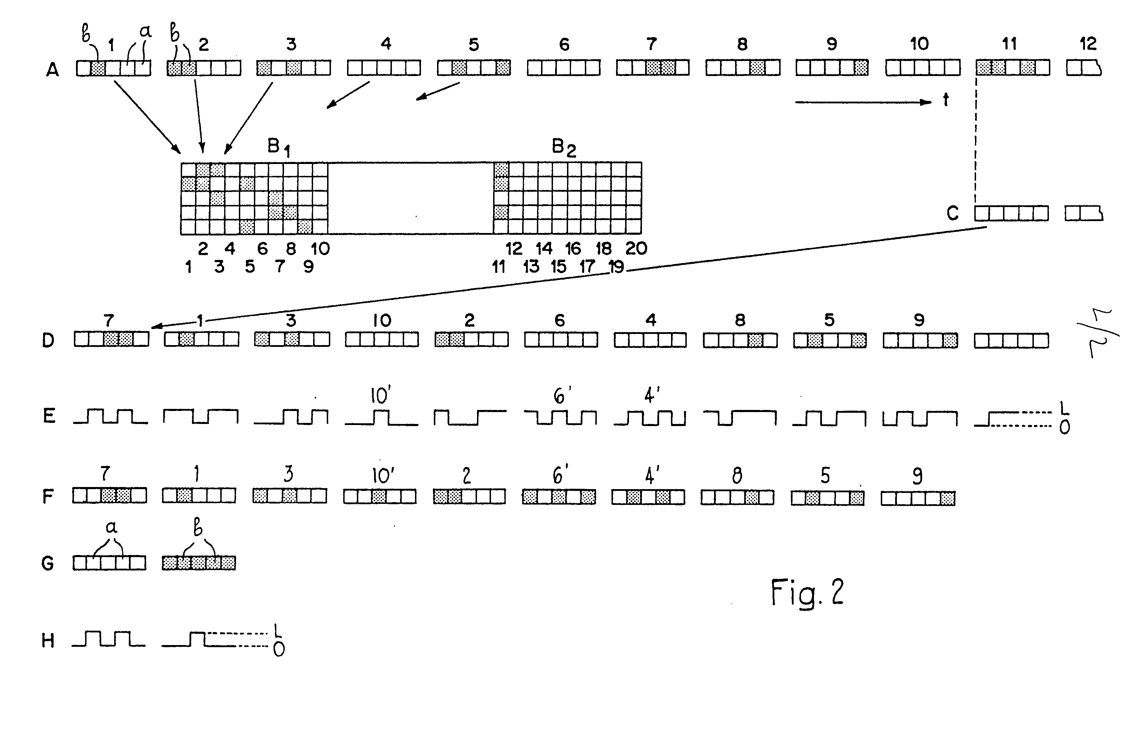

Wie aus Fig. 1 hervorgeht, ist eine Sendestation 20 mit einer Empfangsstation 21 über eine Uebertragungsstrecke 22 verbunden. Die Nachrichtenübertragung von der Sendestation 20 zur Empfangsstation 21 kann auf geeignete, an sich bekannte Weise erfolgen, entweder drahtgebunden oder drahtlos. Die Sendestation 20 weist eine Eingangstufe 23 auf, deren Eingang mit einer Zuleitung 24 für die zu verarbeitende und zu übertragende Information verbunden ist. Der Eingangsstufe 23 ist ein Speicher 25 nachgeschaltet, der aus zwei Speicherhälften B1, B2 (Fig. 2) besteht. Ueber eine Adressleitung 26 ist dieser Speicher 25 eingangsseitig mit einem Schlüsselgenerator 27 verbunden. Der Aufbau und die Wirkungsweise dieses Schlüsselgenerators 27, der die Schlüsselinformation für die Verschlüsselung erzeugt, ist bekannt. Ausgangsseitig ist der Speicher 25 über einen Umschalter 28 mit einer Ausgangsstufe 29 verbunden, an die die Uebertragungsstrecke 22 angeschlossen ist. An den zweiten Pol des Umschalters 28 ist ein Subsitutionssignalgenerator (Hilfsschlüsselgenerator) 30 angeschlossen, der, wie noch zu erläutern sein wird, Subsitutionssignale erzeugt. Dieser Subsitutionssignalgenerator 30 ist ebenfalls bekannter Bauart. An den Ausgang der Eingangsstufe 23 ist weiter ein Detektor 31 angeschlossen, dem eine Speichersteuerschaltung 32 nachgeschaltet ist. Ein weiterer Eingang dieser Speichersteuerschaltung 32 ist über eine Adressleitung 26a mit dem Ausgang des Schlüsselgenerators 27 verbunden. Diese Speichersteuerschaltung 32 steuert über eine Steuerleitung 33 den Umschalter 28. Für gewisse, noch zu erläuternde Anwendungsfälle ist diese Speichersteuerschaltung 32 zudem über eine weitere Steuerleitung 34 mit dem Substitutionssignalgenerator 30 verbunden, um diesen zu steuern.

Die Empfangsstation 21 ist mit einer an die Uebertragungsstrecke 22 angeschlossenen Eingangsstufe 35 versehen, der ein Speicher 36 mit zwei Speicherhälften nachgeschaltet ist. Dieser Speicher 36 entspricht im Aufbau dem Speicher 25 der Sendestation 20. Der Speicher 36 ist weiter über eine Adressleitung 37 mit einem Schlüsselgenerator 38 bekannter Bauart verbunden, der die für die Entschlüsselung notwendige Entschlüsselungsinformation erzeugt. Dieser Schlüsselgenerator 38 läuft, wie das ebenfalls bekannt ist, mit dem sendeseitigen Schlüsselgenerator 27 synchron. Der Ausgang des Speichers 36 ist mit dem einen Pol eines Umschalters 39 verbunden, der an eine Ausgangsstufe 40 angeschlossen ist. Diese Ausgangsstufe 40 ist über eine Verbindungsleitung 41 mit einer Nachrichtensenke verbunden. An weitere Pole des Umschalters 39 sind zwei Informationssignalgeneratoren 42, 43 bekannter Bauart angeschlossen, die auf noch zu beschreibende Weise Informationssignale erzeugen. Der Ausgang der Eingangsstufe 35 ist weiter über eine Zuleitung 45 an den einen Eingang eines Korrelators 44 angeschlossen, dessen zweiter Eingang über eine Verbindungsleitung 46 mit einem Vergleichssignalgenerator (Hilfsschlüsselgenerator) 47 verbunden ist. Dieser Vergleichssignalgenerator 47 ist gleich aufgebaut wie der sendeseitige Substitutionssignalgenerator 30 und läuft mit diesem synchron. Der Vergleichssignalgenerator 47 erzeugt somit dieselbe Folge von Signalen wie der Substitutionssignalgenerator 30. Dem Korrelator 44 ist eine Speichersteuerschaltung 48 nachgeschaltet, die eingangsseitig zudem über eine Adressleitung 37a mit dem Ausgang des Schlüsselgenerators 38 verbunden ist. Ueber eine Steuerleitung 49 steuert die Speichersteuerschaltung 48 auf noch zu beschreibende Weise den Umschalter 39.

Anhand der Fig. 2 wird nun im Folgenden die Funktionsweise der vorstehend beschriebenden Vorrichtung erläutert.

In Fig. 2A ist der von einer nicht dargestellten Nachrichtenquelle über die Zuleitung 24 der Sendestation 20 zugeführte Impulsstrom dargestellt. Dieser wird durch gleichlange Informationssignalblöcke 1 - 12 gebildet, die durch nicht dargestellte Trennzeichen voneinander getrennt sind. Jeder Informationssignalblock 1 - 12 besteht aus fünf Signalen, die entweder "0"-Signale (helle Vierecke) oder "L"- Signale (dunkle Vierecke) sind. Die zeitlich aufeinanderfolgend ankommenden Informationssignalblöcke 1 - 12 werden über die Eingangsstufe 23 in den Speicher 25 eingespeichert. Wie bereits erwähnt und in der Fig. 2 schematisch dargestellt, besteht dieser Speicher 25 aus zwei Speicherhälften B1 und B2. Die ankommenden Signalblöcke 1 - 12 werden der Reihe nach zuerst in die erste Speicherhälfte B1 eingespeichert. Es sei angenommen, dass jede Speicherhälfte B1, B2 ein Einspeichern von zehn Informationssignalblöcken erlaubt. Somit werden die ersten zehn ankommenden Informationssignalblöcke 1 - 10 in die Speicherhälfte B1 eingespeichert. Ist diese Speicherhälfte B1 gefüllt, so erfolgt die Einspeicherung der Informationssignalblöcke 11 -20 in der andern Speicherhälfte B2. Mit Beginn der Einspeicherung des Informationssignalblockes 11 in die Speicherhälfte B2 beginnt nun das Auslesen der einzelnen Informationssignalblöcke aus der ersten Speicherhälfte B1, wie das in Fig. 2 bei C angedeutet ist.

Zum Zwecke der Verschlüsselung erfolgt jedoch das Auslesen aus dem Speicher 25 nun nicht der Reihe nach, sondern nach einem Gesetz, das durch die vom Schlüsselgenerator 27 erzeugte Schlüsselinformation bestimmt wird. In Fig. 2D ist eine mögliche Folge der Informationssignalblöcke dargestellt, wie sie am Ausgang des Speichers 25 erscheinen kann. Aus Fig. 2D ist es nun ohne weiteres ersichtlich, dass die zehn Informationssignalblöcke 1 - 10 in einer gegenüber der ursprünglichen Reihenfolge gemäss Fig. 2A permutierten Folge erscheinen.

Ist die zweite Speicherhälfte B2 gefüllt, so ist die erste Speicherhälfte B1 geleert und zum Einspeichern von neuen Informationssignalblöcken bereit. Währenddessen erfolgt auf entsprechende Weise ein Auslesen der einzelnen Informationssignalblöcke aus der Speicherhälfte B2 in einer durch die Schlüsselinformation gegebenen veränderten zeitlichen Folge. Die in der Sendestation 20 wie erwähnt erzeugte permutierte Folge der Informationssignalblöcke wird an die Empfangsstation 21 übertragen. Die empfangsseitige Eingangsstufe 35 sorgt nun für ein blockweises Einspeichern der empfangenen Imformationssignalgruppen in den Speicher 36. Letzterer weist wie der sendeseitige Speicher 25 zwei Speicherhälften auf, die wie anhand der sendeseitigen Einspeicherung beschrieben abwechselnd gefüllt und ausgelesen werden. Die Einspeicherung der empfangenen Informationssignalblöcke erfolgt jedoch nicht in der ankommenden zeitlichen Reihenfolge, sondern in der ursprünglich der Eingangsstufe 23 der Sendestation 20 zugeführten zeitlichen Reihenfolge, wie sie in Fig. 2A dargestellt ist. Für dieses Einspeichern in der ursprünglichen Reihenfolge sorgt der Schlüsselgenerator 38, der ja wie bereits erwähnt mit dem sendeseitigen Schlüsselgenerator 27 synchron läuft. Dies bedeutet, dass in der ersten Speicherhälfte des Speichers 36 die Informationssignalblöcke 1 - 10 so eingespeichert werden, wie das in Fig. 2
bei Bl gezeigt ist. Durch dieses Einspeichern der Informationssignalblöcke in der ursprünglichen Reihenfolge unter
dem Einfluss des Schlüsselgenerators 38 ist somit eine
Entschlüsselung erreicht worden. Ueber die Ausgangsstufe
40 werden die Informationssignalblöcke über die Verbindungsleitung 41 einer Nachrichtensenke zugeführt.

Um nun kryptologische Einbrüche in das System zu vermeiden
oder zumindest stark zu erschweren, werden auf der Sendeseite Informationssignalblöcke, die einen gegebenen Informationsgehalt aufweisen, durch Substitutionssignalblöcke
ersetzt. Beim gezeigten Ausführungsbeispiel wird nun angenommen, dass alle Informationssignalblöcke, die vollständig aus gleichartigen Signalen, z.B. "0"- Signalen
bestehen, substituiert werden. Das bedeutet, dass in der
in Fig. 2A gezeigten Blockfolge die Informationssignalblöcke 4, 6 und 10 zu ersetzen sind.

Zum Erkennen der zu ersetzenden Informationssignalblöcke
dient der sendeseitige Detektor 31. Dieser erkennt diejenigen Informationssignalblöcke 4, 6, 10, die aus gleichartigen Signalen bestehen. Der Detektor 31 führt die Information, welche Blöcke zu substituieren sind, der Speichersteuerschaltung 32 zu, die über die Adressleitung 26a her
auch die Information erhält, wo im Speicher 25 diese
Blöcke eingespeichert werden. Aus dieser Speichersteuerschaltung 32 kann nun in der Folge der Status jedes im
Speicher 25 eingespeicherten Informationssignalblockes
("zu ersetzen" bzw. "nicht zu ersetzen") abgefragt werden.

Beim Leeren der einzelnen Speicherhälften Bl, B2 ruft nun,
wie das bereits erwähnt worden ist, der Schlüsselgenerator 27 gemäss der von ihm erzeugten Schlüsselinformation die Signalblöcke aus den verschiedenen Speicherplätzen ab. Die abgerufenen Informationssignalblöcke werden über den normalerweise an den Ausgang des Speichers 25 angelegten Umschalter 28 der Ausgangsstufe 29 zugeführt. Wird nun jedoch ein Speicherplatz abgerufen, der einen zu ersetzenden Block enthält (d.h. die Speicherplätze 4, 6 und 10 in der Speicherhälfte Bl), so erzeugt die Speichersteuerschaltung 32, die ja über die Adressleitung 26a vom Schlüsselgenerator 27 angesteuert wird, ein Steuersignal, das über die Steuerleitung 33 ein Umlegen des Umschalters 28 an den Ausgang des Substitutionssignalgenerators 30 bewirkt. Während der Zeitdauer des zu ersetzenden Informationssignalblockes wird nun der Ausgang des Substitutionssignalgenerators 30 mit der Ausgangsstufe 29 verbunden, so dass anstelle des aus gleichartigen Signalen bestehenden Blockes 10, 6, 4 ein Substitutionssignalblock 10', 6',4' an die Empfangsseite 21 übermittelt wird. Dieser Substitutionssignalgenerator 30 hat eine höhere Taktrate als der Schlüsselgenerator 27, da letzterer ja nur für jeden Informationssignalblock eine neue Information zu liefern hat, während der Substitutionssignalgenerator 30 innerhalb eines Blockes ein wenn möglich der Pulsrate entsprechendes, quasi- zufälliges Signal zu liefern hat. In Fig. 2E ist eine mögliche Impulsfolge gezeigt, die durch den Substitutionssignalgenerator 30 erzeugt wird. Diese quasi- zufällige Impulsfolge besteht aus Substitutionssignalblöcken, die durch fünf "0"- bzw. "L"- Signale gebildet werden. Wie bereits erwähnt werden die Informationsignalblöcke 10, 6 und 4 durch die Substitutionssignalblöcke 10', 6' bzw. 4' ersetzt. In Fig. 2F ist nun die Folge von Signalblöcken dargestellt, die über die Uebertragungsstrecke 22 an die Empfangsstation 21 übermittelt wird. Diese übermittelte Folge von Signalblöcken enthält somit keine Blöcke mehr, die ausschliesslich aus gleichartigen Signalen gebildet werden.

Wie bereits erwähnt werden in der Empfangsstation 21 die ankommenden Signalblöcke unter dem Einfluss der vom Schlüsselgenerator 38 erzeugten Entschlüsselungsinformation in den Speicher 36 eingespeichert. Gleichzeitig werden diese Signalblöcke über die Zuleitung 45 dem Korrelator 44 zugeführt. Dieser erhält über die Verbindungsleitung 46 zudem auch Vergleichssignale, die vom Vergleichssignalgenerator 47 erzeugt werden. Da dieser Vergleichssignalgenerator 47 gleich aufgebaut ist wie der sendeseitige Substitutionssignalgenerator 30 und mit diesem synchron läuft, erzeugt der Vergleichssignalgenerator 47 dieselbe Folge von Impulsen wie der Substitutionssignalgenerator 30, d.h. also z.B. ebenfalls die in Fig. 2E gezeigte Signalfolge.

Der Korrelator 44 vergleicht nun die ankommenden, ihm über die Zuleitung 45 zugeführten Signalblöcke mit den vom Vergleichssignalgenerator 47 erhaltenen Vergleichssignalblöcken.Durch diesen Vergleich werden vom Korrelator 44 die sendeseitig eingefügten Substitutionssignalblöcke als solche erkannt. Vergleicht man die in den Fig. 2E und 2F dargestellten Signalfolgen miteinander, so lässt sich ohne weiteres erkennen, dass in den Zeitabschnitten, die den Blöcken 10, 6 und 4 zugeordnet sind, die Signal- folge auf der Uebertragungsstrecke 22, (Fig. 2F) mit der Signalfolge der Vergleichsignale (Fig. 2E) identisch ist. Es ist ebenfalls ersichtlich, dass nicht- substituierte Informationssignalblöcke mit der Vergleichssignalfolge (Fig. 2E) nur wenig korreliert sind, da ihr Aufbau ja nicht durch den Substitutionssignalgenerator 30 erzeugt wurde. Allfällige Uebereinstimmungen zwischen den nicht-substituierten Signalblöcken und den Vergleichssignalblöcken könnten allerdings zu einzelnen Fehlentscheidungen führen. Praktische Untersuchungen an einem Bildtelegrafiesystem haben jedoch eine Wahrscheinlichkeit für derartige Fehlentscheide in der Grössenordnung von $10^{-4}$ ergeben. Bei Start - Stop - Fernschreibsystemen ohne besondere Schutz-massnahmen wird eine solche Wahrscheinlichkeit von Fehlentscheiden allgemein als Regel angenommen und ist daher als "gut" zu klassieren.

Der Korrelator 44 liefert nun die Information bezüglich Status ("Substitutionssignalblock" bzw. "Informationssignalblock") des gerade in den Speicher 36 eingespeicherten Signalblockes der Speichersteuerschaltung 48. Diese Speichersteuerschaltung wird über die Adressleitung 37a vom Schlüsselgenerator 38 gleich wie der Speicher 36 angesteuert. Beim Auslesen der in den Speicher 36 einge-speicherten Signalblöcke werden die als solche erkannten Informationssignalblöcke über den normalerweise an den Ausgang des Speichers 36 angelegten Umschalter 39 an die Ausgangsstufe 40 übertragen. Ist jedoch ein als solcher erkannter Substitutionssignalblock zum Auslesen an der Reihe, so bewirkt die Speichersteuerschaltung 48 über die Steuerleitung 49 ein Umlegen des Umschalters 39 auf den mit dem Informationssignalgenerator 42 verbundenen Kontakt. Dieser Informationssignalgenerator 42 wird somit während der Dauer des auszutauschenden Substitutionssignalblockes mit der Ausgangsstufe 40 verbunden. Der Informationssignalgenerator 42 erzeugt Informationssignalgruppen, die den sendeseitig substituierten Informationssignalgruppen 4, 6 und 10 entsprechen, d.h. die im vorliegenden Ausführungsbeispiel durch "0"-Signale gebildet werden. Am Ausgang der Ausgangsstufe 40 erscheint somit eine Folge von Informationssignalblöcken 1 - 12, die im Aufbau und in der zeitlichen Folge den sendeseitig ankommenden Informationssignalblöcken entsprechen (Fig. 2A).

Da im übertragenen Datenfluss gemäss Fig. 2F keine Signalblöcke mit homogenem inneren Aufbau mehr nachweisbar sind, werden Versuche sehr erschwert, durch blockweise organisierte Korrelationsversuche auf die ursprüngliche Klarinformation hin Rückschlüsse zu ziehen, sofern eine gewisse Verwandtschaft in der Statistik der substituierten und der nicht-substituierten übertragenen Signalblöcke besteht. Die beschriebene Lösung bringt somit eine Erhöhung der Sicherheit gegen ein unbefugtes Entziffern.

Bisher wurde angenommen, dass nur Informationssignalblöcke 4, 6, 10 ersetzt werden, die aus ein und derselben Art von Signalen. d.h. nur aus "0"-Signalen, bestehen. Es ist nun aber möglich, den Detektor 31 so auszubilden, dass er sowohl Informationssignalblöcke erkennt, die nur aus "0"-Signalen bestehen, sowie auch Signalblöcke, die nur aus "L"- Signalen gebildet werden. In diesem Fall liefert der Detektor 31 der Speichersteuerschaltung 32 neben der Information "zu substituierender Block" auch noch die Information über die Art der Signale, die diesen Block bilden. Je nach Art der Signale wird dann die Speichersteuerschaltung 32 über die Steuerleitung 34 den Substitutionssignalgenerator 30 so beeinflussen, dass letzterer für die entsprechende Blocklänge eine "gewöhnliche" Signalfolge gemäss Fig. 2E oder eine Signalfolge mit gegenüber der "gewöhnlichen" Signalfolge umgekehrten Polarität erzeugt. Dies sei anhand der Fig. 2G und 2H erläutert. In der Fig. 2G sind zwei zu substituierende Informationssignalblöcke dargestellt, von denen der eine nur aus "0"-Signalen (a) und der andere nur aus "L"-Signalen (b) besteht. In Fig. 2H sind die beiden Substitutionssignalblöcke dargestellt, die vom Substitutionssignalgenerator 30 erzeugt werden. Ein Vergleich der Fig. 2H mit 2E zeigt, dass der erste Substitutionssignalblock in H gleich ist wie der erste Signalblock in E, während der zweite Signalblock in Fig. 2H, der den aus lauter "L"-Signalen bestehenden Informationsblock zu ersetzen hat, gegenüber dem zweiten Substitutionssignalblock in Fig. 2E entgegengesetzter Polarität ist. Der Korrelator 44 der Empfangsstation 21 wird nun die Polarität des als solchen erkannten Substitutionssignalblockes ebenfalls feststellen können. Der innere Aufbau dieses Signalblockes ist ja mit Ausnahme der Polarität derselbe wie bei der vom Vergleichssignalgenerator 47 erzeugten Signalfolge. Der Korrelator 44 wird demzufolge über die Speichersteuerschaltung 48 veranlassen, dass für die Zeitdauer des zu ersetzenden Substitutionssignalblockes je nach festgesteller Polarität der Umschalter 39 entweder mit dem Ausgang des ersten Informationssignalgenerators 42 oder mit dem Ausgang des zweiten Imformationssignalgenerators 43 verbunden wird. Wie bereits erwähnt, erzeugt der Informationssignalgenerator 42 Informationssignalblöcke, die aus lauter "0"-Signalen bestehen, während der Informationssignal- generator 43 Signalgruppen erzeugt, die nur durch "L"- Signale gebildet werden.

Es ist auch möglich, den Detektor 31 so auszubilden, dass er ausser auf Informationssignalblöcke, die ausschliesslich aus "0"- bzw. "L"- Signalen bestehen, auch auf Informations- signalblöcke anspricht, die beispielsweise über ihre ganze Länge hinweg die Folgen OLOLOL...oder LOLOLO... enthalten. In diesem Fall wird über die Speichersteuerschaltung 32 der Substitutionssignalgenerator so beeinflusst, dass er eine zweite Impulsfolge erzeugt, die sich im Aufbau von der ersten Impulsfolge stark unterscheidet. Es ist jedoch auch möglich, zur Erzeugung dieser zweiten Impulsfolge einen weitern Substitutionssignalgenerator vorzusehen, der parallel zum ersten Substitutionssignalgenerator 30 läuft. Die Speichersteuerschaltung 32 sowie der Umschalter 28 müssten dann entsprechend ausgebildet werden.

Auf der Empfangsseite 21 muss der Korrelator 44 selbstverständlich so ausgebildet werden, dass er auf die verschiedenartigen Substitutionssignalblöcke anspricht. Der derart ausgebildete Korrelator 44 wird über die Speichersteuerschaltung 48 so auf den Umschalter 39 einwirken, dass dieser an den Ausgang eines weitern, in Fig. 1 nicht dargestellten Informationssignalgenerators geschaltet wird, der während der Dauer des zu ersetzenden Signalblockes Signalblöcke der auf der Sendeseite 20 ersetzten Art erzeugt, also z.B. die Signalfolgen OLOLOL... bzw. LOLOLO... .

Im Sinne der obigen Ausführungen lassen sich somit Informationssignalblöcke der folgenden Art substituieren:

OOOOO... durch Substitutionssignalblöcke erster Art
LLLLL... durch Substitutionssignalblöcke erster Art von
    umgekehrter Polarität
OLOLO... durch Substitutionssignalblöcke zweiter Art
LOLOL... durch Substitutionssignalblöcke zweiter Art mit
    umgekehrter Polarität
OOLLO... durch Substitutionssignalblöcke dritter Art
LLOOL... durch Substitutionssignalblöcke dritter Art mit
    umgekehrter Polarität
usw.

In den zuletzt genannten Fällen werden auf der Empfangsseite 21 neben dem Vergleichssignalgenerator 47 vorzugs- weise noch weitere Vergleichssignalgeneratoren vorge- sehen, damit alle Arten von Substitutionssignalen stets gleichzeitig am Korrelator 44 anstehen, damit ohne Zeitverlust die notwendige Entschlüsselung (Rückpermutation) möglich ist.

Es ist selbstverständlich auch denkbar, andere Informations- signalblöcke, die durch ihren Aufbau synifikant und somit kryptologisch gefährlich sind, zu substituieren, z.B. bei Druckschriftübertragung solche Blöcke, die beispielsweise einen Aufbau OOOOLOOOLOOOL... aufweisen, wo also auf die Periode der Schriftzeichen einer Zeile rückgeschlossen werden kann. Je nach Einsatzzweck lassen sich auch andere Konfigurationen von Signalblöcken und andere als die vorgeschlagenen Substitutionsmethoden anwenden. Vorstehend wurde die Erfindungsidee anhand von binären Impulszügen erläutert. Es ist jedoch möglich, das Verfahren auf Systeme mit mehrwertigen digitalen oder kontinuierlichen analogen Signalformen sowie auf komplexer als wie er- läutert organisierte Informationsverarbeitungs- und Ueber- tragungssysteme anzuwenden.

Es versteht sich, dass gewisse der in Fig. 1 dargestellten Bauelemente zu Baueinheiten zusammengefasst werden können, so z.B. die Schlüsselgeneratoren 27, 38 und der Substi- tutionssignalgenerator 30 bzw. der Vergleichsgenerator 47.

## PATENTANSPRUECHE

1. Verfahren zur verschlüsselten Uebertragung von Information, die durch gleichlange, zeitlich aufeinanderfolgende Informationssignalblöcke gebildet wird, bei dem sendeseitig die einzelnen Informationssignalblöcke aufgrund einer Schlüsselinformation in der Zeitachse gegenüber ihrer ursprünglichen zeitlichen Folge permutiert werden und empfangsseitig aufgrund einer Entschlüsselungsinformation die ursprüngliche zeitliche Folge der empfangenen Informationssignalblöcke wieder hergestellt wird, dadurch gekennzeichnet, dass auf der Sendeseite (20) Informationssignalblöcke (10, 6, 4) eines gegebenen Informationsgehaltes durch andersartig aufgebaute Substitutionssignalblöcke (10', 6', 4') ersetzt werden und auf der Empfangsseite (21) anstelle dieser Substitutionssignalblöcke (10', 6', 4') wieder Informationssignalblöcke eingefügt werden, die bezüglich Informationsgehalt den sendeseitig ersetzten Informationssignalblöcken (10, 6, 4) entsprechen.

2. Verfahren nach Anspruch 1, dadurch gekennzeichnet, dass die Substitutionssignalblöcke (10', 6', 4') in mindestens einem Substitutionssignalgenerator (30) erzeugt werden, dessen Ausgangssignale (10', 6', 4') beim Feststellen von Informationssignalblöcken (10, 6, 4) des gegebenen Informationsgehaltes anstelle derselben an die Empfangsseite (21) übermittelt werden.

A 3255 CH
Al:as

8.10.1979

3. Verfahren nach Anspruch 1 oder 2, dadurch gekennzeichnet, dass auf der Empfangsseite (21) die ankommenden Signalblöcke (7,1,3,10'...) mit Vergleichssignalblöcken verglichen werden und die mit Vergleichssignalblöcken übereinstimmenden ankommenden Signalblöcke durch Informationssignalblöcke ersetzt werden, die bezüglich Informationsgehalt den sendeseitig ersetzten Informationssignalblöcken (10, 6, 4) entsprechen.

4. Vorrichtung zur verschlüsselten Uebertragung von Information, die durch gleichlange, zeitlich aufeinanderfolgende Informationssignalblöcke gebildet ist, mit einer sendeseitigen Verschlüsselungseinrichtung, welche aufgrund einer Schlüsselinformation in der Zeitachse eine Permutation der einzelnen Informationssignalblöcke gegenüber ihrer ursprünglichen zeitlichen Folge bewirkt, und mit einer empfangsseitigen Entschlüsselungseinrichtung, durch die aufgrund einer Entschlüsselungsinformation eine Wiederherstellung der ursprünglichen zeitlichen Folge der empfangenen Informationssignalblöcke erfolgt, dadurch gekennzeichnet, dass auf der Sendeseite (20) mindestens ein Substitutionssignalgenerator (30), der Substitutionssignalblöcke (10', 6', 4') erzeugt, und ein die Informationssignalblöcke (1-12) auf ihren Informationsgehalt hin untersuchender Detektor (31) vorhanden sind, der beim Feststellen jeweils eines Informationssignalblockes (10, 6, 4) gegebenen Informationsgehaltes ein Ersetzen desselben durch einen Substitutionssignalblock (10',6', 4') bewirkt, und dass auf der Empfangsseite (21) wenigstens ein Informationssignale erzeugender Informationssignalgenerator (42, 43) sowie eine die Art der ankommenden Signalblöcke (7, 1, 3, 10'...) untersuchende Erkennungseinrichtung (44, 47) vorhanden sind, durch die beim Erkennen jeweils eines Substitutionssignalblockes (10', 6', 4') ein Ersetzen desselben durch einen vom Informationssignalgenerator (42, 43) erzeugten Informationssignalblock erfolgt.

5. Vorrichtung nach Anspruch 4, dadurch gekennzeichnet, dass die Erkennungsschaltung (44, 47) wenigstens einen mit dem sendeseitigen Substitutionssignalgenerator (30) synchron laufenden Vergleichssignalgenerator (47) aufweist, der Vergleichssignalblöcke erzeugt, die den sendeseitig erzeugten Substitutionssignalblöcken (10' 6', 4') entsprechen, und der an einen Korrelator(44) angeschlossen ist, der die Vergleichssignalblöcke mit den ankommenden Signalblöcken (7, 1, 3, 10'...) vergleicht und bei Gleichheit ein Ersetzen der festgestellten Substitutionssignalblöcke (10', 6', 4') durch Informations-signalblöcke bewirkt.

6. Vorrichtung nach Anspruch 4 oder 5, dadurch gekennzeichnet, dass die Verschlüsselungseinrichtung (25, 27) einen Speicher (25) für die ankommenden Informationssignalblöcke (1-12) aufweist, der mit einem die Schlüssel-information erzeugenden Schlüsselgenerator (27) ver-bunden ist und aus dem die eingespeicherten Informations-signalblöcke (1-12) in der durch die Schlüsselinformation festgelegten zeitlichen Folge abrufbar sind, und dass ein vom Detektor (31) her ansteuerbarer Umschalter (28) vorgesehen ist, der je nach Informationsgehalt der Informationsblöcke (1-12) entweder den Ausgang des Speichers (25) oder den Ausgang des Substitutionssignalgenerators (30) mit dem Ausgang (29) der Sendestation (20) verbindet.

7. Vorrichtung nach Anspruch 6, dadurch gekennzeichnet, dass zwischen den Detektor (31) und den Umschalter (28) eine letzteren steuernde, die vom Detektor (31) erhaltene Information bezüglich zu ersetzenden Informationssignalblöcken (10, 6, 4) speichernde Speichersteuerschaltung (32) eigeschaltet ist, die eingangsseitig zudem mit dem Schlüsselgenerator (27) verbunden ist und die bei Abruf eines im Speicher (25) eingespeicherten, zu ersetzenden Informationssignalblockes (10, 6, 4) den Umschalter (28) vom Ausgang des Speichers (25) auf den Ausgang des Substitutionssignalgenerators (30) umschaltet.

8. Vorrichtung nach einem der Ansprüche 4 bis 7, dadurch gekennzeichnet, dass die Entschlüsselungseinrichtung (36, 38) einen Speicher (36) für die empfangenen Signalblöcke (7, 1. 3, 10'...) aufweist, der mit einem die Entschlüsselungsinformation erzeugenden Schlüsselgenerator verbunden ist und in den aufgrund der Entschlüsselungsinformation die ankommenden Signalblöcke (7, 1, 3, 10'...) in der ursprünglichen zeitlichen Folge einspeicherbar sind, und dass ein von der Erkennungseinrichtung (44, 47) her ansteuerbarer Umschalter (39) vorgesehen ist, der je nach festgestellter Art der empfangenen Signalblöcke (7 1, 3, 10') entweder den Ausgang des Speichers (36) oder den Ausgang des Informationssignalgenerators (42, 43) mit dem Ausgang (40) der Empfangsstation (21) verbindet.

9. Vorrichtung nach Anspruch 8, dadurch gekennzeichnet, dass zwischen die Erkennungseinrichtung (44, 47) und den Umschalter (39) eine letzteren steuernde, die von der Erkennungseinrichtung (44, 47) erhaltene Information bezüglich Art der empfangenen Signalblöcke (7, 1, 3, 10'...) speichernde Speichersteuerschaltung (48) eingeschaltet ist, die empfangsseitig zudem mit dem Schlüsselgenerator (38) verbunden ist und die bei Abruf eines im Speicher (36) eingespeicherten, zu ersetzenden Signalblockes (10',
6', 4') den Umschalter (39) vom Ausgang des Informationssignalgenerators (42, 43) umschaltet.

10. Vorrichtung nach einem der Ansprüche 4 bis 9, dadurch
gekennzeichnet, dass auf der Sendeseite (20) mehrere
Substitutionssignalgeneratoren (30) und/oder auf der
Empfangsseite (21) mehrere Informationssignalgeneratoren
(42, 43) vorhanden sind.

Fig.1

Fig. 2

**Europäisches Patentamt**

**EUROPÄISCHER RECHERCHENBERICHT**

Nummer der Anmeldung

EP 80 10 5886

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | |
| | <u>FR - A - 1 271 557</u> (PHILIPS)<br>* Seite 1, linke Spalte, Zeilen 1-9; Seite 1, rechte Spalte, Zeilen 3-13; 36-39; Seite 2, linke Spalte, Zeilen 25-29 *<br><br>-- | 1,4 | H 04 K 1/06<br>1/44 |
| D | <u>FR - A - 2 233 768</u> (PATELHOLD)<br>* Seite 1, Zeilen 7-12; 30-35; Seite 3, Zeilen 28-40; Seite 11, Zeile 33 - Seite 12, Zeile 10 *<br><br>---- | 1,4 | |

RECHERCHIERTE SACHGEBIETE (Int. Cl.³)

H 04 K 1/06
1/02
H 04 L 9/00
H 04 N 1/44
H 04 L 9/02

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-01-1981 | HOLPER |

EPA form 1503.1  06.78